# EUROPÄISCHE PATENTSCHRIFT

(11) **EP 3 190 378 B1**
(45) Veröffentlichungstag und Bekanntmachung des Hinweises auf die Patenterteilung: **02.05.2018**
(21) Anmeldenummer: 17150302.2
(22) Anmeldetag: 04.01.2017
(51) Int. Cl.: F42B 35/00, B64F 5/60, B64D 7/00

(54) **MULTIFUNKTIONALE PRÜFVORRICHTUNG FÜR EINE BEWAFFNUNG**
MULTI-FUNCTIONAL TEST DEVICE FOR AN ARMAMENT
DISPOSITIF D'ESSAI MULTIFONCTIONNEL POUR L'ARMEMENT

(30) Priorität: 08.01.2016 DE 102016000121
(43) Veröffentlichungstag der Anmeldung: 12.07.2017
(73) Patentinhaber: MBDA Deutschland GmbH, 86529 Schrobenhausen (DE)
(72) Erfinder: Grabmeier, Michael, 83022 Rosenheim (DE); Baier, Siegfried, 85276 Pfaffenhofen (DE); Böhm, Alfred, 85764 Oberschleißheim (DE)
(74) Vertreter: Isarpatent

(56) Entgegenhaltungen:
- DE-B4-102009 040 304
- DE-B4-102012 000 671
- US-A1- 2005 081 733

## Beschreibung

### TECHNISCHES GEBIET

Die vorliegende Erfindung betrifft eine multifunktionale Prüfvorrichtung für eine Bewaffnung eines Bewaffnungsträgers nach dem Oberbegriff des Patentanspruchs 1.

### HINTERGRUND DER ERFINDUNG

Eine zuverlässige Einsatzbereitschaft eines Waffensystems im operationellen Betrieb ist essentiell für den Erfolg eines militärischen Auftrags. Insbesondere bei komplexen Waffensystemen stellt das eine große Herausforderung für das Personal des Waffensystems dar. Fliegende Waffensystemen sind häufig baukastenartig strukturiert, wobei auftragsbezogen unterschiedliche Ausrüstungsgegenstände an ein Trägerluftfahrzeug anbringbar sind. Beispielsweise kann ein Trägerluftfahrzeug für einen Aufklärungseinsatz mit Aufklärungsmitteln und für einen Kampfeinsatz mit einer dem zu bekämpfenden Ziel entsprechenden Bewaffnung ausgerüstet sein. Trotz dieser Ausrüstungsflexibilität muss die Einheit aus Trägerluftfahrzeug und Ausrüstungsgegenstand (zum Beispiel der Bewaffnung) nach einer Umrüstung des Trägerluftfahrzeugs sofort zuverlässig einsetzbar ist. Diese Anforderung wiederum erfordert, dass sowohl die Ausrüstung vor dem Anbau an das Trägerluftfahrzeug als auch das mit der Ausrüstung versehene Trägerluftfahrzeug Tests und Prüfungen unterzogen werden, bevor das Trägerluftfahrzeug zu seinem Einsatz aufbricht; es werden also geeignete Prüfvorrichtungen benötigt.

### STAND DER TECHNIK

Die DE 10 2009 040 304 B4 zeigt und beschreibt eine Vorrichtung zum Prüfen eines Flugkörpers und einer Waffenstation eines Trägerluftfahrzeugs. Diese Vorrichtung besteht aus einer Eingabe/Ausgabeeinheit, einer Flugkörpersimulationseinrichtung zum Testen der Waffenstation des Trägerluftfahrzeugs und einem Test- und Servicegerät zum Testen des Flugkörpers.

Aus der DE 10 2012 000 671 B4 ist eine Prüf- und Testvorrichtung für ein Flugkörperstartgerät bekannt, das versehen ist mit einem Prüf- und Testcomputer, mit einer Simulationseinrichtung für relevante Funktionen einer Waffensystemzentrale und einer Flugkörpersimulationseinheit, die das Vorhandensein eines Flugkörpers am Flugkörperstartgerät simuliert. Mit dieser Prüf- und Testvorrichtung kann auf schnelle und einfache Weise die Durchführung von Tests und Überprüfungen von Flugkörperstartgeräten durchgeführt werden, ohne dass diese mit einem scharfen Flugkörper versehen sein müssen und ohne dass diese mit einer Waffensystemzentrale in Verbindung stehen müssen.

Es sind somit im Stand der Technik einzelne Prüf- und Testvorrichtungen bekannt, mit denen jeweils einzelne Komponenten oder Komponentenpaarungen einer Bewaffnung getestet werden können.

### DARSTELLUNG DER ERFINDUNG

Aufgabe der vorliegenden Erfindung ist es, eine multifunktionale Prüfvorrichtung für eine Bewaffnung anzugeben, mit der es möglich ist, die gesamte Funktionskette der Bewaffnung eines baukastenartig strukturierten Waffensystems vor und nach der Integration der Bewaffnung mit dem Bewaffnungsträger zu testen.

Diese Aufgabe wird gelöst durch die multifunktionale Prüfvorrichtung mit den Merkmalen des Anspruchs 1.

Die erfindungsgemäße multifunktionale Prüfvorrichtung ist vorgesehen für eine Bewaffnung eines eine Waffenanlage aufweisenden Bewaffnungsträgers, wobei die Bewaffnung zumindest eine am Bewaffnungsträger anbringbare Waffenträgereinrichtung für zumindest einen Flugkörper aufweist. Dazu ist die Prüfvorrichtung versehen mit einer ersten Stimulations- und Prüfkomponente für die Waffenanlage des Bewaffnungsträgers, wobei die erste Stimulations- und Prüfkomponente eine erste Prüfschnittstelle aufweist, die mit einer Waffenanlagenschnittstelle des Bewaffnungsträgers verbindbar ist; mit einer zweiten Stimulations- und Prüfkomponente für die Waffenträgereinrichtung, wobei die zweite Stimulations- und Prüfkomponente eine zweite Prüfschnittstelle aufweist, die mit einer Bewaffnungsträgerschnittstelle der Waffenträgereinrichtung verbindbar ist; mit einer dritten Stimulations- und Prüfkomponente für die Waffenträgereinrichtung, wobei die dritte Stimulations- und Prüfkomponente eine dritte Prüfschnittstelle aufweist, die mit einer Flugkörperschnittstelle der Waffenträgereinrichtung verbindbar ist, und mit einer vierten Stimulations- und Prüfkomponente für den zumindest einen Flugkörper, wobei die vierte Stimulations- und Prüfkomponente eine vierte Prüfschnittstelle aufweist, die mit einer Waffenträgerschnittstelle des zumindest einen Flugkörpers verbindbar ist.

### VORTEILE

Durch die Erfindung wird die komplette Testabdeckung einer Bewaffnung mit einer einzigen Prüfvorrichtung ermöglicht, nämlich die Einzelprüfung der Munition (zum Beispiel eines Flugkörpers mit einem Startrohr), die Einzelprüfung der Waffenträgereinrichtung, die Einzelprüfung der Waffenanlagenanteile im Bewaffnungsträger (zum Beispiel im Trägerluftfahrzeug), die Funktionskette der Munition in der Waffenträgereinrichtung (zum Beispiel in einem Werfer) vor Anbau der Waffenträgereinrichtung an den Bewaffnungsträger, die Funktionskette des Bewaffnungsträgers mit der Waffenanlage und der am Bewaffnungsträger angebauten Waffenträgereinrichtung.

Weitere bevorzugte und vorteilhafte Ausgestaltungsmerkmale der erfindungsgemäßen multifunktionalen Prüfvorrichtung sind Gegenstand der Unteransprüche 2 bis 8.

Vorzugsweise weist die Prüfvorrichtung ein Prüfsteuergerät auf, das mit einem Prüfcomputer verbunden oder verbindbar ist.

Besonders vorteilhaft ist eine Variante, bei der die dritte Prüfschnittstelle mit zumindest einem Munitionsadapter verbunden oder verbindbar ist, der anstelle eines Flugkörpers mit der Flugkörperschnittstelle der Waffenträgereinrichtung verbindbar ist.

Weiter vorteilhaft ist es, wenn die Prüfvorrichtung eine Flugkörperaufnahme aufweist, die Teil der vierten Stimulations- und Prüfkomponente für den Flugkörper ist.

Vorzugsweise weist die vierte Stimulations- und Prüfkomponente für den Flugkörper einen Zielsimulator für einen Suchkopf des Flugkörpers auf.

Von Vorteil ist es auch, wenn zur Durchführung eines Selbsttests der Prüfvorrichtung die erste Prüfschnittstelle mit der zweiten Prüfschnittstelle und die dritte Prüfschnittstelle mit der vierten Prüfschnittstelle verbindbar ist.

Bei einem bevorzugten praktischen Einsatz der Erfindung ist der Bewaffnungsträger ein Trägerluftfahrzeug.

Bevorzugter Weise ist die Waffenträgereinrichtung ein Werfer für eine Mehrzahl von Flugkörpern.

Eine vorteilhafte Realisierung der Erfindung nutzt die mechanische Struktur des Werfers, der Munition aufnehmen kann und der durch die Schnittstellen zu Munition und Bewaffnungsträger das Bindeglied zwischen Munition und Bewaffnungsträger ist und dadurch eine geeignete Basis für ein Kombitestgerät, also für eine multifunktionale Prüfvorrichtung, bildet.

Bevorzugte Ausführungsbeispiele der Erfindung mit zusätzlichen Ausgestaltungsdetails und weiteren Vorteilen sind nachfolgend unter Bezugnahme auf die beigefügten Zeichnungen näher beschrieben und erläutert.

### KURZE BESCHREIBUNG DER ZEICHNUNGEN

Es zeigt:
- Fig. 1: eine schematische Darstellung der erfindungsgemäßen Prüfvorrichtung;
- Fig. 2: die erfindungsgemäße Prüfvorrichtung verbunden mit der Waffenanlage eines Trägerluftfahrzeugs;
- Fig. 3: die erfindungsgemäße Prüfvorrichtung verbunden mit einer Waffenträgereinrichtung;
- Fig. 4: die erfindungsgemäße Prüfvorrichtung bei einem Flugkörpertest;
- Fig. 5: die erfindungsgemäße Prüfvorrichtung beim Test einer Flugkörperschnittstelle der an einem Trägerluftfahrzeug angebrachten Waffenträgervorrichtung;
- Fig. 6: die erfindungsgemäße Prüfvorrichtung bei einer Prüfung der mit Flugkörper ausgestatteten Waffenträgereinrichtung und
- Fig. 7: die erfindungsgemäße Prüfvorrichtung bei einem Selbsttest.

### DARSTELLUNG VON BEVORZUGTEN AUSFÜHRUNGSBEISPIELEN

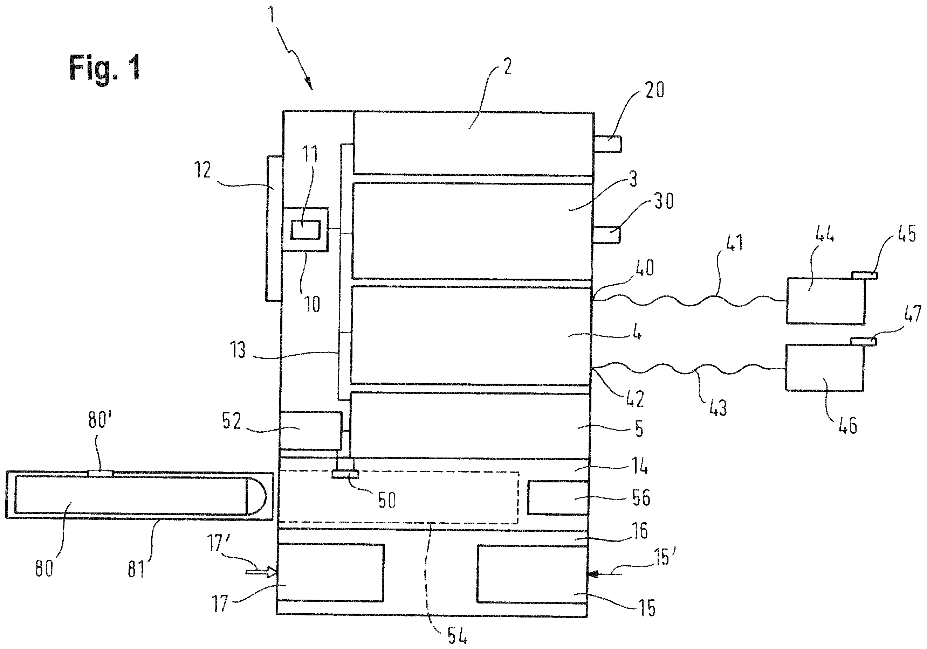

Fig. 1 zeigt schematisch den Aufbau einer erfindungsgemäßen multifunktionalen Prüfvorrichtung 1. Die Prüfvorrichtung 1 ist versehen mit einem einen Prüfcomputer 11 aufweisenden Prüfsteuergerät 10 sowie einer Anzeige- und Bedieneinheit 12, beispielsweise einem Tough-Screen. Weiterhin weist die Prüfvorrichtung 1 eine Mehrzahl von Stimulations- und Prüfkomponenten 2, 3, 4, 5 und eine Munitionsteststation 14 auf, die mittels eines internen Datenbusses 13 untereinander und mit dem Steuergerät 10 verbunden sind.

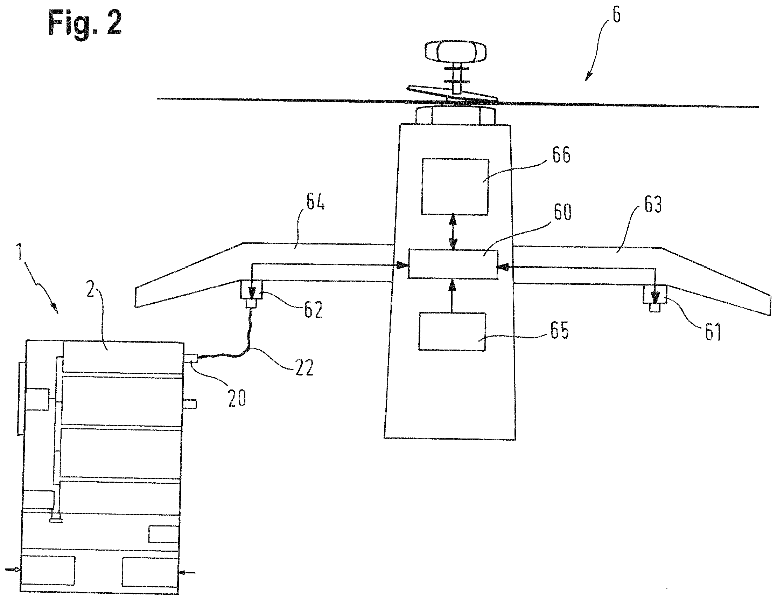

Eine erste Stimulations- und Prüfkomponente 2 für die Waffenanlage 60 eines Bewaffnungsträgers 6 (Fig. 2) ist mit einer ersten Prüfschnittstelle 20 versehen, die beispielsweise zum Anschluss eines standardisierten ersten Umbilicalkabels 22 zur Verbindung mit einem eine Waffenanlagenschnittstelle 62 des Bewaffnungsträgers 6 bildenden Umbilicalanschluss ausgebildet sein kann.

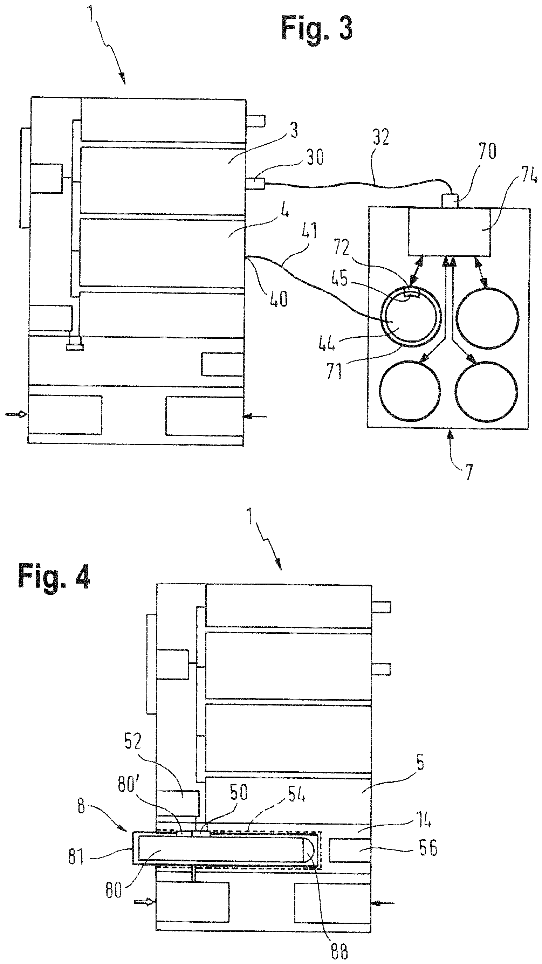

Eine zweite Stimulations- und Prüfkomponente 3 für eine Waffenträgereinrichtung 7 (Fig. 3) ist mit einer zweiten Prüfschnittstelle 30 versehen, die beispielsweise zum Anschluss eines standardisierten zweiten Umbilicalkabels 32 zur Verbindung mit einem eine Bewaffnungsträgerschnittstelle 70 bildenden Umbilicalanschluss der Waffenträgereinrichtung 7 ausgebildet sein kann.

Eine dritte Stimulations- und Prüfkomponente 4 ist mit zumindest einem Munitionsadapter-Anschluss 40, 42 versehen, an den jeweils eine Munitionsadapterleitung 41, 43 anschließbar ist, die eine Verbindung zwischen der dritten Stimulations- und Prüfkomponente 4 und einem zugeordneten Munitionsadapter 44, 46 herstellt, der jeweils eine Adapterschnittstelle 45, 47 aufweist. Im gezeigten Beispiel sind entsprechend der Ausgestaltung der Waffenträgereinrichtung 7 vier Munitionsadapter vorgesehen, von denen in Fig. 1 jedoch nur zwei dargestellt sind.

Eine vierte Stimulations- und Prüfkomponente 5 ist mit zumindest einer vierten Prüfschnittstelle 50 verbunden, die in der Munitionsteststation 14 vorgesehen ist. Weiterhin ist die vierte Stimulations- und Prüfkomponente 5 mit einer in der Prüfvorrichtung 1 vorgesehenen Zünderprüfeinrichtung 52 verbunden, die ihrerseits ebenfalls mit der zumindest einen vierten Prüfschnittstelle 50 in der Munitionsteststation 14 verbunden ist. Im gezeigten Beispiel ist die Munitionsteststation 14 entsprechend der Ausgestaltung der Waffenträgereinrichtung 7 mit vier Munitionsaufnahmen 54 versehen, von denen in Fig. 1 jedoch nur eine dargestellt ist. Es ist gleichwohl aber auch möglich, nur eine Munitionsaufnahme oder eine andere beliebige Anzahl von Munitionsaufnahmen in der Prüfvorrichtung vorzusehen.

Die Munitionsaufnahme 54 ist derart ausgebildet, dass in sie ein Flugkörper 80 zusammen mit einem den Flugkörper 80 aufnehmenden Flugkörperbehälter 81 eingeführt werden kann. Jede dieser Munitionsaufnahmen 54 weist eine vierte Prüfschnittstelle 50 auf, die bei in die Munitionsaufnahme 54 eingeführtem Flugkörperbehälter 81 mit den elektrischen Kontakten eines Versorgungs- und Kommunikationsanschlusses 80' des Flugkörpers 80 eine elektrische Verbindung herstellt. In einer jeden Munitionsteststation 14 ist außerdem, dem inneren Ende der zugeordneten Munitionsaufnahme 54 benachbart, ein Zielsimulator 56 für einen Suchkopf des Flugkörpers 80 vorgesehen.

Unterhalb der Munitionsteststation 14 ist die Prüfvorrichtung 1 mit einem Servicebereich 16 versehen, in dem Versorgungseinrichtungen für die Prüfvorrichtung wie beispielsweise eine elektrische Energieversorgungseinrichtung 15 und eine Druckluftversorgungseinrichtung 17 vorgesehen sind. Die elektrische Energieversorgungseinrichtung 15 wird mittels einer Stromversorgungsleitung 15' von außen mit elektrischer Energie versorgt. Die Druckluftversorgungseinrichtung 17 wird mittels einer Druckluftleitung 17' von außen mit Druckluft versorgt.

Die Prüfvorrichtung 1 weist die nachstehend aufgeführten wesentlichen Sicherheitsmerkmale auf:
- Durch das Vorsehen beispielsweise einer Softwaresperre, die nur die Prüfung einer zu testenden Komponente oder bestimmter Einzelfunktionen zulässt, oder eines Bedienmenüs, das nur die Einzelanwahl der zu testenden Komponenten oder bestimmter Einzelfunktionen ermöglicht, kann jeweils nur alternativ entweder eine Munition (Flugkörper) oder eine Waffenträgereinrichtung (Werfer) oder die Waffenanlage des Bewaffnungsträgers getestet werden, wodurch ein versehentliches Aktivieren einer Munitionszündleitung zuverlässig verhindert wird.
- Es besteht keine Verbindung der Zündleitungen zwischen der Waffenanlage des Bewaffnungsträgers und den Munitionen, so dass kein versehentliches Zünden einer Munition erfolgen kann.

In Fig. 2 ist eine erfindungsgemäße Prüfvorrichtung dargestellt, die mit einer beispielsweise von einem stilisiert dargestellten Helikopter gebildeten Trägerluftfahrzeug verbunden ist, das einen Bewaffnungsträger 6 bildet. Der Helikopter ist versehen mit einer Waffenanlage 60, die mit einer ersten und einer zweiten Waffenanlagenschnittstelle 61, 62 verbunden ist, die an als Stummelflügel ausgebildeten Waffenträgerarmen 63, 64 angeordnet sind. Eine Energieversorgungseinrichtung 65 versorgt die Waffenanlage 60 mit elektrischer Energie. Weiterhin steht die Waffenanlage 60 in Datenkommunikationsverbindung mit einer Avionik 66 des Trägerluftfahrzeugs. Auch wenn im gezeigten Beispiel der Fig. 2 der Bewaffnungsträger als Helikopter dargestellt ist, kann der Bewaffnungsträger auch von anderen bemannten oder unbemannten Trägerluftfahrzeugen, beispielsweise von einer Drohne, gebildet sein. Auch ist der Bewaffnungsträger nicht auf Trägerluftfahrzeuge beschränkt, sondern kann genauso gut von einem Schiff oder einem Landfahrzeug oder einer stationären Einrichtung gebildet sein.

Die Waffenanlage 60 des Trägerluftfahrzeugs, also des Bewaffnungsträgers 6, ist über ein an der Waffenanlagenschnittstelle 62 angeschlossenes erstes Umbilicalkabel 22 mit der ersten Simulations- und Prüfkomponente 2 der Prüfvorrichtung 1 verbunden. Die in Fig. 2 dargestellte Konfiguration dient zur Prüfung der Waffenanlage 60 des Bewaffnungsträgers 6. Dazu wird die Waffenanlage 60 von der ersten Stimulations- und Prüfkomponente 2 der Prüfvorrichtung 1 stimuliert und die Reaktion der an der Waffenanlagenschnittstelle 62 angeschlossenen Waffenträgereinrichtung 7 wird auf korrektes Verhalten hin überprüft. Es werden dabei Aktionen wie die Zielsuche, die Zielzuweisung, die Zielerfassung und die Zielerfolgung stimuliert und geprüft und die drahtlose Datenübertragung (Datenlink) von der Waffenanlage 60 zu einem im Realfall fliegenden Flugkörper wird getestet.

In Fig. 3 ist eine erfindungsgemäße Prüfvorrichtung 1 gezeigt, deren zweite Stimulations- und Prüfkomponente 3 über ein an der zweiten Prüfschnittstelle 30 angeschlossenes zweites Umbilicalkabel 32 mit einer Bewaffnungsträgerschnittstelle 70 der Waffenträgereinrichtung 7 verbunden ist. Die Bewaffnungsträgerschnittstelle 70 ist üblicherweise dazu vorgesehen, die Waffenträgereinrichtung 7 mit der Waffenanlagenschnittstelle 62 der Waffenanlage 60 des Bewaffnungsträgers 6 zu koppeln.

Des Weiteren ist die dritte Stimulations- und Prüfkomponente 4 über eine an ihre dritte Prüfschnittstelle 40 angeschlossene erste Munitionsadapterleitung 41 mit dem ersten Munitionsadapter 44 verbunden und der erste Munitionsadapter 44 ist in eine erste Flugkörperaufnahme 71 von vier in der Waffenträgereinrichtung 7 vorgesehenen Flugkörperaufnahmen eingeführt. Durch das Einführen des Munitionsadapters 44 in die Flugkörperaufnahme 71 ist die Adapterschnittstelle 45 des Munitionsadapters 44 in elektrischem Kontakteingriff mit der Flugkörperschnittstelle 72 der Flugkörperaufnahme 71 gebracht worden. Sowohl die Bewaffnungsträgerschnittstelle 70 als auch die Flugkörperschnittstelle 72 stehen somit in elektrischer Verbindung und in Datenübertragungsverbindung mit einer in der Waffenträgereinrichtung 7 vorgesehenen Waffenträgerelektronik 74, deren Verhalten mit dem in Fig. 3 gezeigten Aufbau getestet werden kann. Dazu wird die Waffenträgereinrichtung 7 von der zweiten Stimulations- und Prüfungskomponente 3 an der Bewaffnungsträgerschnittstelle 70 stimuliert und die Reaktion der Waffenträgereinrichtung 7 und deren Wirkung auf das Verhalten eines Flugkörpers wird geprüft. Bei diesen Tests wird eine Prüfung auf korrektes Verhalten der Waffenträgereinrichtung 7 und insbesondere der Waffenträgerelektronik 74 durchgeführt. Zudem erfolgt eine Prüfung auf korrektes Verhalten der Interaktion der Waffenträgereinrichtung 7 und von dessen Waffenträgerelektronik 74 mit dem vom Munitionsadapter 44 simulierten Flugkörper. Durch Stimulation der Waffenträgereinrichtung 7 mittels der dritten Stimulations- und Prüfkomponente 4 und des Munitionsadapters 44 wird das Verhalten des Waffenträgers 7 auf Rückmeldungen und Reaktionen eines Flugkörpers getestet.

Auch wenn in Fig. 3 nur ein Testaufbau mit einem einzigen Munitionsadapter gezeigt ist, ist es möglich, alle vier Flugkörperaufnahmen der Waffenträgereinrichtung 7 mit vier parallel an der dritten Stimulations- und Prüfkomponente 4 angeschlossenen Munitionsadaptern durchzuführen. Allerdings ist die Erfindung nicht auf Waffenträgereinrichtungen mit vier Flugkörperaufnahmen beschränkt, sondern es können genauso gut weniger oder mehr Flugkörperaufnahmen in einer Waffenträgereinrichtung vorgesehen sein.

Fig. 4 zeigt den Einsatz der erfindungsgemäßen Prüfvorrichtung 1 zum Testen einer Munition 8, nämlich im gezeigten Beispiel eines in einem Flugkörperbehälter 81 aufgenommenen Flugkörpers 80. Der Flugkörperbehälter 81 mit dem darin befindlichen Flugkörper 80 ist in die Flugkörperaufnahme 54 der Munitionsteststation 14 der Prüfvorrichtung eingeführt, wobei der Versorgungs- und Kommunikationsanschluss 80' des Flugkörpers 80 mit der vierten Prüfschnittstelle 50 der vierten Stimulations- und Prüfkomponente 5 der Prüfvorrichtung 1 in kontaktierendem Eingriff steht. Der in der Rumpfnase des Flugkörpers 80 vorgesehene Suchkopf 88 des Flugkörpers 80 ist dabei vor dem Zielsimulator 56 der vierten Stimulations- und Prüfkomponente 5 gelegen.

Die vierte Stimulations- und Prüfkomponente 5 stimuliert die letale Munition 8, indem sie die Waffenträgereinrichtung 7 mit deren Waffenträgerelektronik 74 simuliert. Dabei wird das korrekte Verhalten der reversiblen Funktionen der letalen Munition 8 geprüft. Zudem erfolgt eine Zünderprüfung, indem mittels der Zünderprüfeinrichtung 52 die Zündwiderstände der Munition 8 geprüft werden. Des Weiteren erfolgt mittels des Zielsimulators 56 eine Zielsimulation zur Prüfung des Suchkopfes 88 des Flugkörpers 80. Die für den Testbetrieb der Munition 8 erforderliche Druckluft wird dem Flugkörper 80 von der Druckluftversorgungseinrichtung 17 zugeführt. Weiterhin wird dem Suchkopf 88 des Flugkörpers 80 Kühlgas aus einem (nicht gezeigten) Kühlgasbehälter zugeführt, der in der Prüfvorrichtung 1 vorgesehen oder mit dieser verbunden ist.

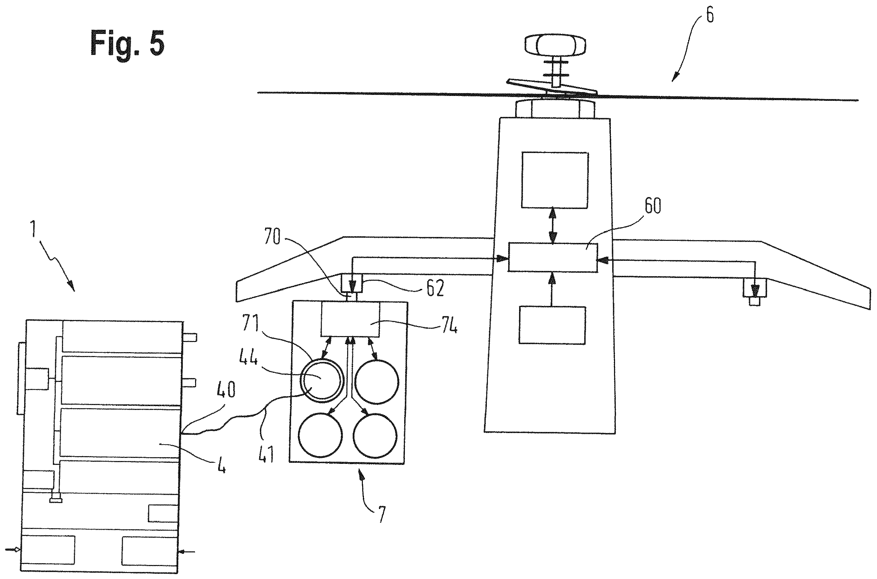

Fig. 5 zeigt eine Einsatzkonfiguration für die erfindungsgemäße Prüfvorrichtung 1, bei welcher der beispielhaft von einem stilisiert dargestellten Helikopter gebildete Bewaffnungsträger 6 an seiner einen Waffenanlagenschnittstelle 62 mit einer Waffenträgereinrichtung 7 ausgerüstet ist. Dazu ist die Bewaffnungsträgerschnittstelle 70 der Waffenträgereinrichtung 7 mit der Waffenanlagenschnittstelle 62 mechanisch und elektrisch verbunden. Die dritte Stimulations- und Prüfkomponente 4 der Prüfvorrichtung 1 ist mit einer an deren dritte Prüfschnittstelle 40 angeschlossenen ersten Munitionsadapterleitung 41 mit einem Munitionsadapter 44 verbunden, der, wie dies in Verbindung mit dem Beispiel der Fig. 3 beschrieben worden ist, in die Flugkörperaufnahme 71 der Waffenträgereinrichtung 7 eingesetzt ist. Auch hier ist der Munitionsadapter 44 über seine Adapterschnittstelle 45 mit der Flugkörperschnittstelle 72 der Flugkörperaufnahme 71 elektrisch kontaktierend verbunden, wie dies bereits in Verbindung mit Fig. 3 beschrieben worden ist. Selbstverständlich kann auch in der in Fig. 5 gezeigten Konfiguration ein zweiter, dritter und/oder vierter Munitionsadapter vorgesehen sein, der in verbleibende der Flugkörperaufnahmen der Waffenträgereinrichtung 7 in gleicher Weise eingesetzt ist und der, wie dies in Verbindung mit Fig. 1 beschrieben worden ist, mit der dritten Stimulations- und Prüfkomponente 4 verbunden ist.

Mittels des in Fig. 5 gezeigten Aufbaus kann die Funktionskette von der Waffenanlage 60 des Bewaffnungsträgers und der Waffenträgereinrichtung 7 bis zur Flugkörperaufnahme 71 getestet werden. Mittels des Munitionsadapters 44 (beziehungsweise der weiteren Munitionsadapter) stimuliert die dritte Stimulations- und Prüfkomponente 4 die Waffenträgereinrichtung 7, insbesondere deren Waffenträgerelektronik 74, die Waffenanlage 60 des Bewaffnungsträgers 6, wobei von der dritten Stimulations- und Prüfkomponente 4 das korrekte Antwortverhalten der Waffenträgereinrichtung 7 beziehungsweise von dessen Waffenträgerelektronik 74 und der Waffenanlage 60 des Bewaffnungsträgers geprüft wird; es wird also auf diese Weise die Interaktion der in der Waffenträgereinrichtung 7 aufgenommenen Munition 8 mit dem Bewaffnungsträger 6 geprüft.

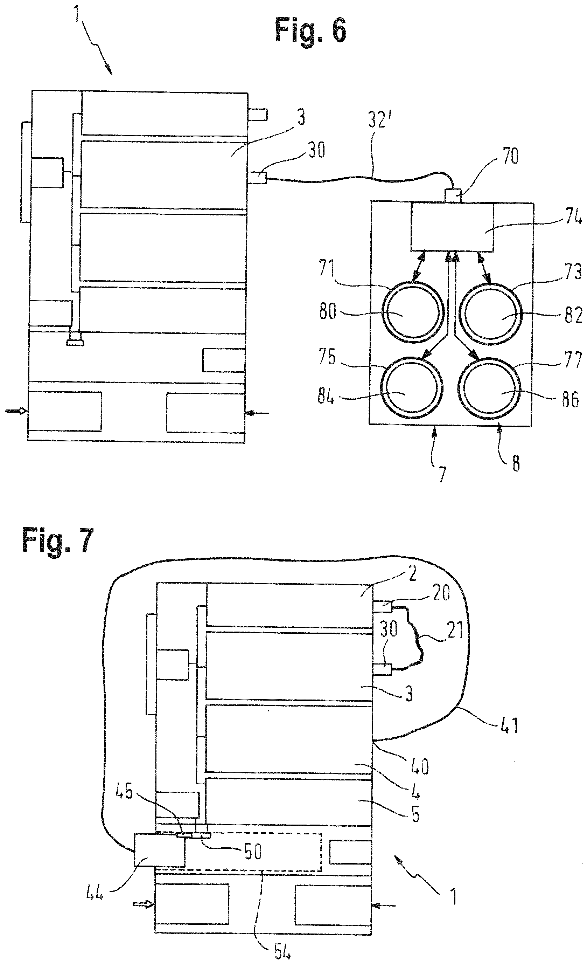

In Fig. 6 ist ein Einsatzszenario der erfindungsgemäßen Prüfvorrichtung 1 dargestellt, bei welchem die zweite Stimulations- und Prüfkomponente 3 mittels eines an die zweite Prüfschnittstelle 30 angeschlossenen zweiten Umbilicalkabels 32' mit der Bewaffnungsträgerschnittstelle 70 der Waffenträgereinrichtung 7 verbunden ist. In jede der Flugkörperaufnahmen 71, 73, 75, 77 der Waffenträgereinrichtung 7 ist ein letaler Flugkörper 80, 82, 84, 86 eingeführt, so dass die Waffenträgereinrichtung 7 vollständig mit letaler Munition bestückt ist. Mit diesem Aufbau kann die Funktionskette der Waffenträgereinrichtung 7 mit deren Waffenträgerelektronik 74 und der Munition 8 geprüft werden.

Die zweite Stimulations- und Testeinrichtung 3 stimuliert die Waffenträgereinrichtung 7 über das speziell ausgebildete zweite Umbilikalkabel 32' und die Bewaffnungsträgerschnittstelle 70 und simuliert dabei das Verhalten der Waffenanlage 60 des Bewaffnungsträgers 6, um alle reversiblen Funktionen der Waffenträgereinrichtung 7 und der Munition 8, also der Flugkörper 80, 82, 84, 86, zu aktivieren. Simuliert werden dabei der operationelle Hochlauf der Munitionen sowie die Modi Power-Up, Coarse Alignment, Fine Alignment 1, Fine Alignment 2 und Autonomous Tracking before Launch.

Bei diesem Einsatzszenario sind die nachstehenden redundanten Sicherheitskriterien zur Verhinderung eines versehentlichen Munitionsverschusses vorgesehen:
- die Verwendung eines speziellen Test-Umbilikalkabels 32' zwischen der zweiten Stimulations- und Testeinrichtung 3 und der Waffenträgereinrichtung 7, sodass keine Energie zum Zünden von Munitionsbatterien und Starttriebwerken zur Waffenträgereinrichtung 7 und damit zu den Flugkörpern 80, 82, 84, 86 geliefert werden kann. Die zweite Stimulations- und Testeinrichtung 3 kann dieses Test-Umbilikalkabel 32' vom operationellen Umbilikalkabel mittels eines diskreten Signals unterscheiden, das durch Vorsehen einer Brücke zur zweiten Stimulations- und Testeinrichtung 3 zurückgeführt ist (beim operationellen Kabel ist das Signal offen wegen der fehlenden Brücke);
- die Waffenträgerelektronik 74 erkennt an den von den Flugkörpern abgelesenen Identifikationssignalen der Flugkörper, ob es sich um eine reale Munition oder um einen Munitionsadapter handelt;
- die zweite Stimulations- und Testeinrichtung 3 sendet eine Identifikationsbotschaft an die Waffenträgereinrichtung 7 via Datenbus, an der die Waffenträgerelektronik 74 erkennt, dass es sich bei der an der Bewaffnungsträgerschnittstelle 70 angeschlossenen Komponente um die zweite Stimulations- und Testeinrichtung 3 und nicht um das Trägerluftfahrzeug, also um den Bewaffnungsträger 6, handelt, wodurch die Waffenträgerelektronik 74 die Zündleitungen jeder Flugkörperschnittstelle 72 nur dann aktiviert, falls sie eindeutig erkennt, dass keine reale Munition, sondern nur ein Munitionsadapter in der Waffenträgereinrichtung 7 geladen ist.

Falls der Bediener an der Anzeige- und Bedieneinheit 12 der Prüfvorrichtung 1 den Test "Werfer + reale Munition" selektiert, wird der Bediener mittels eines Touchscreen-Dialoges Punkt für Punkt abgefragt, welche Testmittel und Prüflinge vorliegen und zusammengebaut sind. Die Prüfvorrichtung (Steuergerät) verifiziert jede Angabe mit entsprechenden Messungen. Bei Diskrepanz zwischen Bedienereingabe und Messung erfolgt ein Testabbruch.

Fig. 7 zeigt eine Selbsttest-Konfiguration der Prüfvorrichtung 1. Dazu ist die erste Stimulations- und Prüfkomponente 2 mittels eines an die erste Prüfschnittstelle 20 angeschlossenen Selbsttestkabels 21 mit der zweiten Prüfschnittstelle 30 der zweiten Stimulations- und Prüfkomponente 3 elektrisch verbunden. Weiterhin ist ein an die dritte Schnittstelle 40 der dritten Stimulations- und Prüfkomponente 4 mittels einer ersten Munitionsadapterleitung 41 angeschlossener Munitionsadapter 44 in die Flugkörperaufnahme 54 der Munitionsteststation 14 der Prüfvorrichtung so eingeführt, dass die Adapterschnittstelle 45 des Munitionsadapters 44 mit der vierten Prüfschnittstelle 50 der vierten Stimulations- und Prüfschnittkomponente 5 in elektrischem Kontakt steht.

Die erste Stimulations- und Prüfkomponente 2 für die Waffenanlage des Bewaffnungsträgers und die zweite Stimulations- und Prüfkomponente 3 für die Waffenträgereinrichtung prüfen jeweils gegenseitig, ob der Interaktionspartner korrekt arbeitet. Diese Interaktion wird vom Prüfcomputer 11 des zentralen Prüfsteuergeräts 10 der Prüfvorrichtung 1 überwacht und gesteuert. In analoger Weise agieren auch die dritte Stimulations- und Prüfkomponente 4 für die Waffenträgereinrichtung über ihren Munitionsadapter 44 und die vierte Stimulations- und Prüfkomponente 5 für den zumindest einen Flugkörper miteinander und prüfen, ob der jeweilige Interaktionspartner korrekt funktioniert. Auch diese Interaktion wird vom Prüfcomputer 11 des zentralen Prüfsteuergeräts 10 überwacht und gesteuert.

Die erfindungsgemäße Prüfvorrichtung bietet sowohl dem Nutzer als auch dem Instandsetzer eine komplette Testabdeckung einer Waffenanlage mit einer einzigen Prüfvorrichtung, die folgende Prüfungen ermöglicht:
- Einzelprüfung der Munition (Flugkörper)
- Einzelprüfung der Waffenträgereinrichtung (Werfer)
- Einzelprüfung der Waffenanlagenanteile im Bewaffnungsträger
- Prüfen der Funktionskette "Munitionen im Werfer" (vor Anbau des Werfers an den Bewaffnungsträger)
- Prüfen der Funktionskette "Bewaffnungsträger mit Waffenanlage und angebautem Werfer ohne letale Munition.

Durch den beschriebenen integrierten Aufbau der Prüfvorrichtung ergibt sich ein mechanisches Munitionshandling wie beim operationellen Werfer, sodass auch bei der Prüfung Trainingseffekte für den operationellen Einsatz erzielt werden.

Die Grundidee des beschriebenen Aufbaus der erfindungsgemäßen Prüfvorrichtung besteht darin, eine mechanische Struktur zu benutzen, die jener einer Waffenträgereinrichtung ähnelt und die Munitionen (Flugkörper) aufnehmen kann und die durch die Schnittstellen zu Munition und Bewaffnungsträger ein Bindeglied zwischen Munition und Waffenträgereinrichtung ist und dadurch eine geeignete Basis für ein Kombitestgerät bietet.

Bezugszeichen in den Ansprüchen, der Beschreibung und den Zeichnungen dienen lediglich dem besseren Verständnis der Erfindung und sollen den Schutzumfang nicht einschränken.

### Bezugszeichenliste

Es bezeichnen:
- 1: Prüfvorrichtung
- 2: erste Stimulations- und Prüfkomponente
- 3: zweite Stimulations- und Prüfkomponente
- 4: dritte Stimulations- und Prüfkomponente
- 5: vierte Stimulations- und Prüfkomponente
- 6: Bewaffnungsträger
- 7: Waffenträgereinrichtung
- 8: Munition
- 10: Prüfsteuergerät
- 11: Prüfcomputer
- 12: Anzeige- und Bedieneinheit
- 13: Datenbus
- 14: Munitionsteststation
- 15: elektrische Energieversorgungseinrichtung
- 15': Stromversorgungsleitung
- 16: Servicebereich
- 17: Druckluftversorgungseinrichtung
- 17': Druckluftleitung
- 20: erste Prüfschnittstelle
- 21: Selbsttestkabel
- 22: erstes Umbilicalkabel
- 30: zweite Prüfschnittstelle
- 32: zweites Umbilicalkabel
- 32': spezielles zweites Umbilicalkabel
- 40: dritte Prüfschnittstelle
- 41: erste Munitionsadapterleitung
- 42: dritte Prüfschnittstelle
- 43: zweite Munitionsadapterleitung
- 44: Munitionsadapter
- 45: Adapterschnittstelle
- 46: Munitionsadapter
- 47: Adapterschnittstelle
- 50: vierte Prüfschnittstelle
- 52: Zünderprüfeinrichtung
- 54: Flugkörperaufnahme
- 56: Zielsimulator
- 60: Waffenanlage
- 61: erste Waffenanlagenschnittstelle
- 62: zweite Waffenanlagenschnittstelle
- 63: Waffenträgerarm
- 64: Waffenträgerarm
- 65: Energieversorgungseinrichtung
- 66: Avionik
- 70: Bewaffnungsträgerschnittstelle
- 71: Flugkörperaufnahme
- 72: Flugkörperschnittstelle
- 73: Flugkörperaufnahme
- 74: Waffenträgerelektronik
- 75: Flugkörperaufnahme
- 77: Flugkörperaufnahme
- 80: Flugkörper
- 80': Versorgungs- und Kommunikationsanschluss
- 81: Flugkörperbehälter
- 82: Flugkörper
- 84: Flugkörper
- 86: Flugkörper
- 88: Suchkopf

## Patentansprüche

1. Multifunktionale Prüfvorrichtung für eine Bewaffnung eines eine Waffenanlage (60) aufweisenden Bewaffnungsträgers (6), wobei die Bewaffnung zumindest eine am Bewaffnungsträger (6) anbringbare Waffenträgereinrichtung (7) für zumindest einen Flugkörper (80, 82, 84, 86) aufweist,
**dadurch gekennzeichnet,**
**dass** die Prüfvorrichtung (1) versehen ist mit
- einer ersten Stimulations- und Prüfkomponente (2) für die Waffenanlage (60) des Bewaffnungsträgers (6), wobei die erste Stimulations- und Prüfkomponente (2) eine erste Prüfschnittstelle (20) aufweist, die mit einer Waffenanlagenschnittstelle (62) des Bewaffnungsträgers (6) verbindbar ist;
- einer zweiten Stimulations- und Prüfkomponente (3) für die Waffenträgereinrichtung (7), wobei die zweite Stimulations- und Prüfkomponente (3) eine zweite Prüfschnittstelle (30) aufweist, die mit einer Bewaffnungsträgerschnittstelle (70) der Waffenträgereinrichtung (7) verbindbar ist;
- einer dritten Stimulations- und Prüfkomponente (4) für die Waffenträgereinrichtung (7), wobei die dritte Stimulations- und Prüfkomponente (4) zumindest eine dritte Prüfschnittstelle (40, 42) aufweist, die mit einer Flugkörperschnittstelle (72) der Waffenträgereinrichtung (7) verbindbar ist, und
- einer vierten Stimulations- und Prüfkomponente (5) für den zumindest einen Flugkörper (80, 82, 84, 86), wobei die vierte Stimulations- und Prüfkomponente (5) zumindest eine vierte Prüfschnittstelle (50) aufweist, die mit einer Waffenträgerschnittstelle des zumindest einen Flugkörpers (80, 82, 84, 86) verbindbar ist.

2. Multifunktionale Prüfvorrichtung nach Anspruch 1,
**dadurch gekennzeichnet,**
**dass** die Prüfvorrichtung (1) ein Prüfsteuergerät (10) aufweist, das mit einem Prüfcomputer verbunden oder verbindbar ist oder einen Prüfcomputer (11) aufweist.

3. Multifunktionale Prüfvorrichtung nach Anspruch 1 oder 2,
**dadurch gekennzeichnet,**
**dass** die dritte Prüfschnittstelle (40, 42) mit zumindest einem Munitionsadapter (44, 46) verbunden oder verbindbar ist, der anstelle eines Flugkörpers (80, 82, 84, 86) mit der Flugkörperschnittstelle (72) der Waffenträgereinrichtung (7) verbindbar ist.

4. Multifunktionale Prüfvorrichtung nach einem der vorhergehenden Ansprüche,
**dadurch gekennzeichnet,**
**dass** die Prüfvorrichtung (1) zumindest eine Flugkörperaufnahme (54) aufweist, die Teil der vierten Stimulations- und Prüfkomponente (5) für den Flugkörper (80, 82, 84, 86) ist.

5. Multifunktionale Prüfvorrichtung nach einem der vorhergehenden Ansprüche,
**dadurch gekennzeichnet,**
**dass** die vierte Stimulations- und Prüfkomponente (5) für den Flugkörper (80, 82, 84, 86) einen einer jeweiligen Flugkörperaufnahme (54) zugeordneten Zielsimulator (56) für einen Suchkopf (88) des Flugkörpers (80, 82, 84, 86) aufweist.

6. Multifunktionale Prüfvorrichtung nach einem der vorhergehenden Ansprüche,
**dadurch gekennzeichnet,**
**dass** zur Durchführung eines Selbsttests der Prüfvorrichtung die erste Prüfschnittstelle (20) mit der zweiten Prüfschnittstelle (30) und die zumindest eine dritte Prüfschnittstelle (40, 42) mit der vierten Prüfschnittstelle (50) verbindbar ist.

7. Multifunktionale Prüfvorrichtung nach einem der vorhergehenden Ansprüche,
**dadurch gekennzeichnet,**
**dass** der Bewaffnungsträger (6) ein Trägerluftfahrzeug ist.

8. Multifunktionale Prüfvorrichtung nach einem der vorhergehenden Ansprüche,
**dadurch gekennzeichnet,**
**dass** die Waffenträgereinrichtung (7) ein Werfer für eine Mehrzahl von Flugkörpern (80, 82, 84, 86) ist.

## Claims

1. Multifunctional test device for an armament of an armaments carrier (6) which comprises a weapons system (60), the armament having at least one weapon carrier device (7), attachable to the armaments carrier (6), for at least one missile (80, 82, 84, 86),
**characterised in that**
the test device (1) is provided with
- a first stimulation and testing component (2) for the weapons system (60) of the armaments carrier (6), the first stimulation and testing component (2) having a first test interface (20) which is connectable to a weapons system interface (62) of the armaments carrier (6);
- a second stimulation and testing component (3) for the weapon carrier device (7), the second stimulation and testing component (3) having a second test interface (30) which is connectable to an armaments carrier interface (70) of the weapon carrier device (7);
- a third stimulation and testing component (4) for the weapon carrier device (7), the third stimulation and testing component (4) having at least one third test interface (40, 42) which is connectable to a missile interface (72) of the weapon carrier device (7), and
- a fourth stimulation and testing component (5) for the at least one missile (80, 82, 84, 86), the fourth stimulation and testing component (5) having at least one fourth testing interface (50) which is connectable to a weapon carrier interface of the at least one missile (80, 82, 84, 86).

2. Multifunctional test device according to claim 1,
**characterised in that**
the test device (1) comprises a test control appliance (10), which is connected or connectable to a test computer or comprises a test computer (11).

3. Multifunctional test device according to either claim 1 or claim 2,
**characterised in that**
the third test interface (40, 42) is connected or connectable to at least one munitions adapter (44, 46), which is connectable to the missile interface (72) of the weapon carrier device (7) in place of a missile (80, 82, 84, 86).

4. Multifunctional test device according to any of the preceding claims,
**characterised in that**
the test device (1) comprises at least one missile receiver (54), which is part of the fourth stimulation and testing component (5) for the missile (80, 82, 84, 86) .

5. Multifunctional test device according to any of the preceding claims,
**characterised in that**
the fourth stimulation and testing component (5) for the missile (80, 82, 84, 86) comprises a target simulator (56), assigned to an associated missile receiver (54), for a seeker (88) of the missile (80, 82, 84, 86).

6. Multifunctional test device according to any of the preceding claims,
**characterised in that**
to carry out self-testing of the test device the first test interface (20) is connectable to the second test interface (30) and the at least one third test interface (40, 42) is connectable to the fourth test interface (50) .

7. Multifunctional test device according to any of the preceding claims,
**characterised in that**
the armaments carrier (6) is a carrier aircraft.

8. Multifunctional test device according to any of the preceding claims,
**characterised in that**
the weapon carrier device (7) is a launcher for a plurality of missiles (80, 82, 84, 86).

## Revendications

1. Dispositif d'essai multifonctionnel pour l'armement d'un porteur d'armement (6) comportant un système d'armes (60), l'armement comportant au moins un moyen de support d'armes (7) pouvant être installé sur le porteur d'armement (6) pour au moins un missile (80, 82, 84, 86),
**caractérisé en ce que**
le dispositif d'essai (1) est doté de
- un premier composant de stimulation et d'essai (2) pour le système d'armes (60) du porteur d'armement (6), le premier composant de stimulation et d'essai (2) comportant une première interface d'essai (20), qui peut être reliée à une interface de système d'armes (62) du porteur d'armement (6) ;
- un deuxième composant de stimulation et d'essai (3) pour le moyen de support d'armes (7), le deuxième composant de stimulation et d'essai (3) comportant une deuxième interface d'essai (30), qui peut être reliée à une interface de porteur d'armement (70) du moyen de support d'armes (7) ;
- un troisième composant de stimulation et d'essai (4) pour le moyen de support d'armes (7), le troisième composant de stimulation et d'essai (4) comportant au moins une troisième interface d'essai (40, 42), qui peut être reliée à une interface de missile (72) du moyen de support d'armes (7), et
- un quatrième composant de stimulation et d'essai (5) pour l'au moins un missile (80, 82, 84, 86), le quatrième composant de stimulation et d'essai (5) comportant au moins une quatrième interface d'essai (50), qui peut être reliée à une interface de support d'armes de l'au moins un missile (80, 82, 84, 86) .

2. Dispositif d'essai multifonctionnel selon la revendication 1
**caractérisé en ce que**
le dispositif d'essai (1) comporte un appareil de commande d'essai (10), qui est ou peut être relié à un ordinateur d'essai ou qui comporte un ordinateur d'essai (11).

3. Dispositif d'essai multifonctionnel selon la revendication 1 ou 2,
**caractérisé en ce que**
la troisième interface d'essai (40, 42) est ou peut être reliée à au moins un adaptateur de munition (44, 46), qui peut être relié à l'interface de missile (72) du moyen de support d'armes (7) à la place d'un missile (80, 82, 84, 86) .

4. Dispositif d'essai multifonctionnel selon l'une des revendications précédentes,
**caractérisé en ce que**
le dispositif d'essai (1) comporte au moins un logement de missile (54), qui fait partie du quatrième composant de stimulation et d'essai (5) pour le missile (80, 82, 84, 86) .

5. Dispositif d'essai multifonctionnel selon l'une des revendications précédentes,
**caractérisé en ce que**
le quatrième composant de stimulation et d'essai (5) pour le missile (80, 82, 84, 86) comporte un simulateur de cible (56) associé à un logement de missile (54) respectif, pour un autodirecteur (88) du missile (80, 82, 84, 86).

6. Dispositif d'essai multifonctionnel selon l'une des revendications précédentes,
**caractérisé en ce que**,
pour l'exécution d'un autotest du dispositif d'essai, la première interface d'essai (20) peut être reliée à la deuxième interface d'essai (30) et l'au moins une troisième interface d'essai (40, 42) à la quatrième interface d'essai (50).

7. Dispositif d'essai multifonctionnel selon l'une des revendications précédentes,
**caractérisé en ce que**
le porteur d'armement (6) est un aéronef porteur.

8. Dispositif d'essai multifonctionnel selon l'une des revendications précédentes,
**caractérisé en ce que**
le moyen de support d'armes (7) est un lanceur pour une pluralité de missiles (80, 82, 84, 86).
